# EUROPEAN PATENT SPECIFICATION

(11) **EP 3 422 458 B1**
(45) Date of publication and mention of the grant of the patent: **03.06.2020**
(21) Application number: 18179734.1
(22) Date of filing: 26.06.2018
(51) Int. Cl.: H01M 10/0525, H01M 10/0567, H01M 10/0569

(54) **ELECTROLYTE AND LITHIUM-ION BATTERY**
ELEKTROLYT UND LITHIUM-IONEN-BATTERIE
ÉLECTROLYTE ET BATTERIE LITHIUM-ION

(30) Priority: 28.06.2017 CN 201710506188
(43) Date of publication of application: 02.01.2019
(73) Proprietor: Contemporary Amperex Technology Co., Limited, Ningde, Fujian 352100 (CN)
(72) Inventor: JU, Feng, Ningde, Fujian 352100 (CN); HAN, Changlong, Ningde, Fujian 352100 (CN); TIAN, Shaojie, Ningde, Fujian 352100 (CN); ZHANG, Cui, Ningde, Fujian 352100 (CN); FU, Chenghua, Ningde, Fujian 352100 (CN)
(74) Representative: Manitz Finsterwald Patent- und Rechtsanwaltspartnerschaft mbB

(56) References cited:
- EP-A1- 2 144 321
- WO-A1-2014/163055

## Description

### RELATED APPLICATIONS

The present application claims priority to Chinese patent application No. CN201710506188.0, filed on June 28, 2017.

### FIELD OF THE PRESENT INVENTION

The present invention relates to the field of battery, and particularly relates to an electrolyte and a lithium-ion battery.

### BACKGROUND OF THE PRESENT INVENTION

The lithium-ion battery used as a power source has wide applications in the automotive industry, however, the disadvantage of a relatively small charging speed of the lithium-ion battery has become one of the limiting factors for replacing traditional fuel vehicles. Lithium titanate is generally used in the negative electrode plate for commercial lithium-ion battery having a large charging speed, but lithium titanate has a low energy density, and therefore the lithium-ion battery having both a fast charging speed and a high energy density cannot be obtained. As the problem of environmental deterioration is getting more prominent, people present higher requirements on the electric vehicles, and the development of the lithium-ion battery having both a high energy density and a large charging speed has become an urgent matter at the moment.

At present, effective methods to solve the above problems includes: using high-capacity nickel-cobalt-manganese ternary material as the positive active material, using graphite as the negative active material and selecting an electrolyte having high dynamic performances. In order to obtain the electrolyte having both a high rate and a large charging speed, organic solvents with low viscosity are generally used, but these organic solvents are easily decomposed into gas under high temperature, although adding additives into the electrolyte can inhibit the decomposition of the electrolyte and the gas generation of the lithium-ion battery, the protective membranes formed by the additives and used to effectively separate the electrolyte and the positive electrode plate or the negative electrode plate tend to have too large impedance, which may in turn affect the performances of the lithium-ion battery, for example, it may affect the power performances under both room temperature and low temperature of the lithium-ion battery.

EP 2 144 321 A1 discloses an electrolyte according to the preamble of claim 1.

WO 2014/163055 A1 and EP 2 983 233 A1 disclose a nonaqueous electrolytic solution having an electrolyte salt dissolved in a nonaqueous solvent. The electrolyte salt used in the nonaqueous electrolytic solution comprises one or more lithium salts selected from e.g. LiPO₂F₂, Li₂PO₃F, lithium bis[oxalate-O,O']borate, and lithium difluorobis[oxalate-O,O']phosphate, lithium difluoro[oxalate-O,O']borate and lithium tetrafluoro[oxalate-O,O']phosphate.

Therefore, how to balance the cycle performance under fast charging, the storage performance under high temperature and the power performances under both room temperature and low temperature of the lithium-ion battery has always been the goal of this field.

### SUMMARY OF THE PRESENT INVENTION

In view of the problem existing in the background, an object of the present invention is to provide an electrolyte and a lithium-ion battery, the electrolyte can improve the cycle performances under both room temperature fast charging and high temperature fast charging, the power performances under both room temperature and low temperature and the storage performance under high temperature of the lithium-ion battery at the same time.

In order to achieve the above object, in a first aspect of the present invention, the present invention provides an electrolyte, which comprises an electrolyte salt, an organic solvent and an additive. The organic solvent comprises ethylene carbonate, dimethyl carbonate and ethyl methyl carbonate; the additive comprises a boron-based lithium oxalate, a fluorinated lithium phosphate and one or two selected from a group consisting of vinylene carbonate and fluoroethylene carbonate. The boron-based lithium oxalate is one or more selected from following compounds:

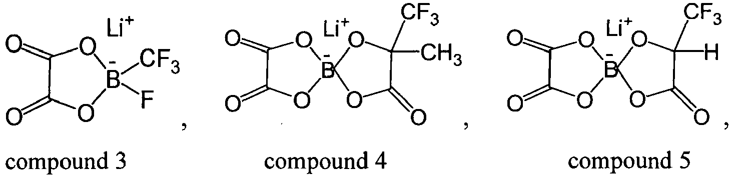

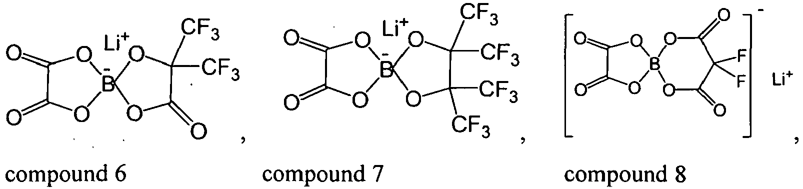

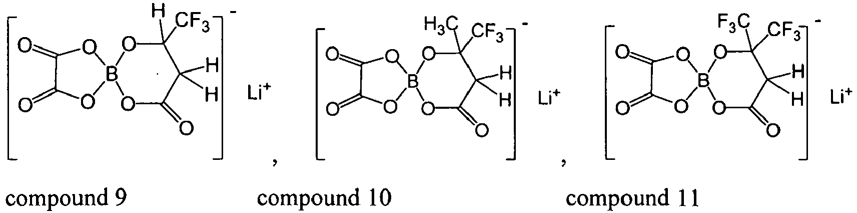

In a second aspect of the present invention, the present invention provides a lithium-ion battery, which comprises the electrolyte according to the first aspect of the present invention.

The present invention has following beneficial effects: the electrolyte of the present invention can improve the cycle performances under both room temperature fast charging and high temperature fast charging, the power performances under both room temperature and low temperature and the storage performance under high temperature of the lithium-ion battery at the same time.

### DETAILED DESCRIPTION

Hereinafter an electrolyte and a lithium-ion battery according to the present invention are described in detail.

Firstly, an electrolyte according to a first aspect of the present invention is described, the electrolyte comprises an electrolyte salt, an organic solvent and an additive. The organic solvent comprises ethylene carbonate (EC), dimethyl carbonate (DMC) and ethyl methyl carbonate (EMC); the additive comprises a boron-based lithium oxalate, a fluorinated lithium phosphate and one or two selected from a group consisting of vinylene carbonate and fluoroethylene carbonate. The boron-based lithium oxalate is one or more selected from following compounds:

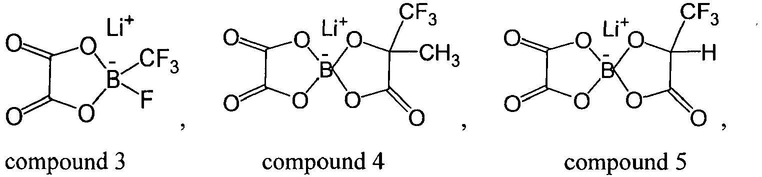

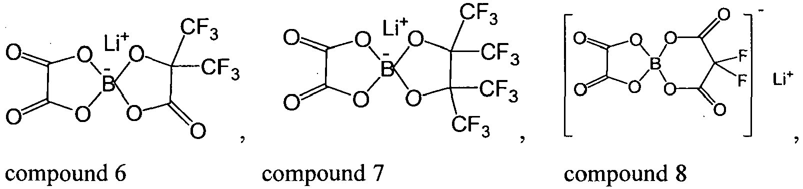

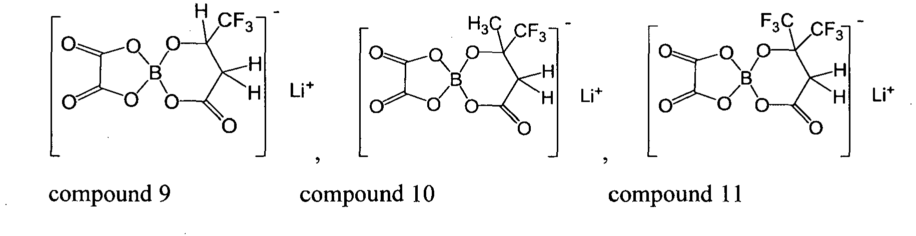

In the electrolyte according to the first aspect of the present invention, the dimethyl carbonate has a low viscosity, and can thus effectively decrease the concentration polarization of the lithium-ion battery and significantly improve the cycle performances under both room temperature fast charging and high temperature fast charging of the lithium-ion battery, however, the dimethyl carbonate has a worse oxidation stability and is easily oxidized and decomposed into gas, and therefore the storage performance under high temperature of the lithium-ion battery is seriously deteriorated. The boron-based lithium oxalate can stabilize the oxygen elements in the positive active material and decrease the amount of side reactions between the positive active material and the dimethyl carbonate; the boron-based lithium oxalate can also be reduced and decomposed at the negative electrode plate and form a more dense SEI membrane, so as to prevent metal ions dissolved out from the positive active material from being reduced at the negative electrode plate. When the boron-based lithium oxalate is used together with the dimethyl carbonate, the cycle performances under both room temperature fast charging and high temperature fast charging and the storage performance under high temperature of the lithium-ion battery are improved at the same time. However, when the content of the boron-based lithium oxalate is too high, it may be not fully consumed during the formation of the SEI membrane, the extra boron-based lithium oxalate is easily decomposed into gas during the cycle processes under both room temperature fast charging and high temperature fast charging and the storage process under high temperature of the lithium-ion battery due to the presence of oxalate (C₂O₄²⁻), and the power performance under low temperature of the lithium-ion battery is also deteriorated. The fluorinated lithium phosphate also can deactivate the positive electrode plate and decrease the amount of side reactions between the positive electrode plate and the dimethyl carbonate, and when the fluorinated lithium phosphate is used together with the boron-based lithium oxalate, the cycle performances under both room temperature fast charging and high temperature fast charging and the storage performance under high temperature of the lithium-ion battery are all improved; moreover, the low temperature impedance of the lithium-ion battery is decreased, and therefore the power performance under low temperature of the lithium-ion battery is also improved. However, the fluorinated lithium phosphate is insoluble in the electrolyte, the conductivity of the electrolyte is significantly decreased, and therefore the power performance under room temperature of the lithium-ion battery is worse. The vinylene carbonate and/or the fluoroethylene carbonate can be reduced and decomposed at the negative electrode plate and participate in the formation of the SEI membrane, the high temperature stability of the lithium-ion battery is increased and the cycle performance under high temperature fast charging of the lithium-ion battery is thus improved, but the impedance of the SEI membrane is inevitably increased. When the vinylene carbonate and/or the fluoroethylene carbonate are used together with the boron-based lithium oxalate and the fluorinated lithium phosphate, the cycle performances under both room temperature fast charging and high temperature fast charging, the power performances under both room temperature and low temperature and the storage performance under high temperature of the lithium-ion battery are all excellent, and therefore the lithium-ion battery not only has a large charging speed, but also has a high energy density and a high power.

In the electrolyte, the boron-based lithium oxalate of compounds 3 to 11 according to the first aspect of the present invention or the boron-based or phosphorus-based lithium oxalate of compounds 1, 2, 12 to 14 not according to the present invention may be one or more selected from following compounds.

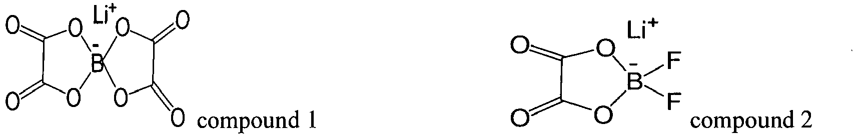

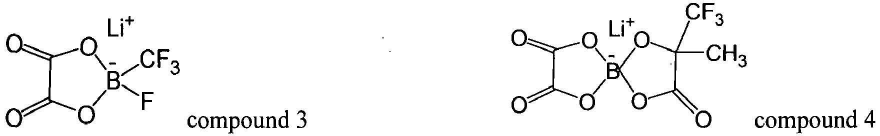

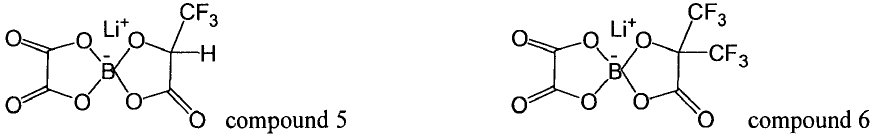

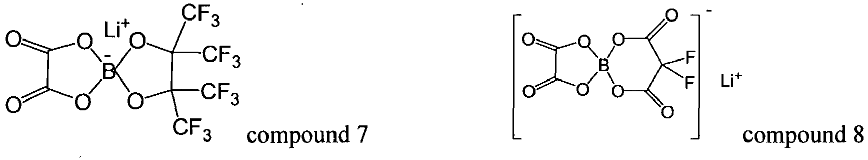

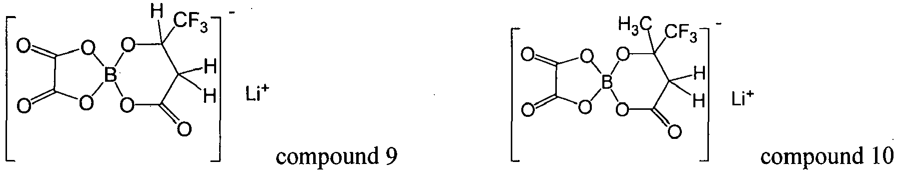

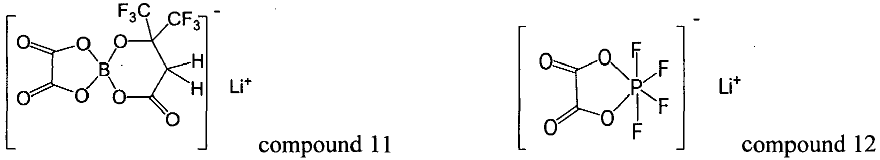

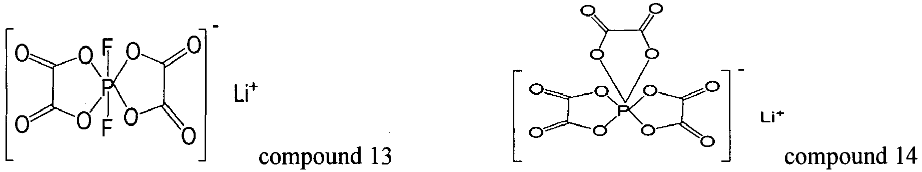

In the electrolyte according to the first aspect of the present invention, the fluorinated lithium phosphate may be one or two selected from a group consisting of lithium monofluorophosphate (Li₂PO₃F) and lithium difluorophosphate (LiPO₂F₂).

In the electrolyte according to the first aspect of the present invention, a total mass of the ethylene carbonate and the ethyl methyl carbonate may be 60%~80% of a total mass of the organic solvent.

In the electrolyte according to the first aspect of the present invention, a content of the boron-based lithium oxalate may be 0.3%~1% of a total mass of the electrolyte. When there is too much boron-based lithium oxalate in the electrolyte, the boron-based lithium oxalate may be not fully consumed during the formation of the SEI membrane, and the extra boron-based lithium oxalate is easily decomposed into gas during the storage process under high temperature of the lithium-ion battery due to the presence of oxalate (C₂O₄²⁻) in the boron-based lithium oxalate.

In the electrolyte according to the first aspect of the present invention, a content of the fluorinated lithium phosphate may be 0.3%∼1% of the total mass of the electrolyte. When the content of the fluorinated lithium phosphate is too high, the conductivity of the electrolyte will be significantly decreased because the fluorinated lithium phosphate is insoluble in the electrolyte, and therefore the power performance under room temperature of the lithium-ion battery will be deteriorated.

In the electrolyte according to the first aspect of the present invention, a content of the vinylene carbonate may be 0.5∼1.5% of the total mass of the electrolyte, a content of the fluoroethylene carbonate may be 0.7%∼2% of the total mass of the electrolyte. The vinylene carbonate and the fluoroethylene carbonate can be reduced and decomposed at the negative electrode plate and participate in the formation of the SEI membrane, the high temperature stability of the lithium-ion battery was increased, and therefore the cycle performances under both room temperature fast charging and high temperature fast charging and the storage performance under high temperature of the lithium-ion battery are all improved. However, when there is too much vinylene carbonate in the electrolyte, the extra vinylene carbonate will be oxidized and decomposed at the surface of the positive electrode plate, which will increase the amount of gas generated in the lithium-ion battery and deteriorate the storage performance under high temperature of the lithium-ion battery. Similarly, when there is too much fluoroethylene carbonate in the electrolyte, the extra fluoroethylene carbonate will be easily oxidized and decomposed into HF under the high oxidation ability of Ni, which will also increase the amount of gas generated in the lithium-ion battery and deteriorate the storage performance under high temperature of the lithium-ion battery. Preferably, when the vinylene carbonate and the fluoroethylene carbonate are added into the electrolyte at the same time, the total mass of the vinylene carbonate and the fluoroethylene carbonate is not more than 2% of the total mass of the electrolyte.

In the electrolyte according to the first aspect of the present invention, the organic solvent may further comprise a linear carboxylic acid ester, the linear carboxylic acid ester is one or more selected from compounds represented by formula 6. In formula 6, R₂₁ is one selected from a group consisting of H, C1∼C10 alkyl of straight chain or branched chain, C1∼C10 haloalkyl of straight chain or branched chain, C3∼C8 cycloalkyl and C3∼C8 halocycloalkyl; R₂₂ is one selected from a group consisting of C1∼C10 alkyl of straight chain or branched chain, C1∼C10 haloalkyl of straight chain or branched chain, C3∼C8 cycloalkyl and C3∼C8 halocycloalkyl.

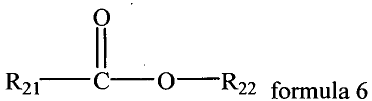

In formula 6, preferably, R₂₁ is one selected from a group consisting of H, C1∼C4 alkyl of straight chain or branched chain, C1∼C4 haloalkyl of straight chain or branched chain, C5∼C7 cycloalkyl and C5∼C7 halocycloalkyl; R₂₂ is one selected from a group consisting of C1∼C4 alkyl of straight chain or branched chain, C1∼C4 haloalkyl of straight chain or branched chain, C5∼C7 cycloalkyl and C5∼C7 halocycloalkyl.

In formula 6, specifically, C1∼C10 alkyl of straight chain or branched chain may be one selected from a group consisting of methyl, ethyl, n-propyl, isopropyl, n-butyl, isobutyl, s-butyl, t-butyl, n-amyl, isoamyl, t-amyl, neoamyl, 2,2-dimethyl propyl, 1-ethyl propyl, 1-methyl butyl, 2-methyl butyl, n-hexyl, isohexyl, 2-hexyl, 3-hexyl, 2-methyl amyl, 3-methyl amyl, 1,1,2-trimethyl propyl, 3,3-dimethyl butyl, n-heptyl, 2-heptyl, 3-heptyl, 2-methyl hexyl, 3-methyl hexyl, 4-methyl hexyl, isoheptyl, n-octyl, nonyl and decyl. C1∼C10 haloalkyl of straight chain or branched chain may be one selected from a group consisting of chloromethyl, dichloromethyl, trichloromethyl, 1-chloroethyl, 1,2-dichloroethyl, 2-chloro-n-propyl, 2,2-dichloro-n-propyl, 1-chloroisopropyl, 1-chloron-n-butyl, 2-chloroisobutyl, 1-chloron-n-amyl, 2-chloron-n-amyl, 1-chloroisoamyl, 2,2-dichloromethylpropyl, 3-chloro-2,2-dimethylpropyl, 1-chloro-l-ethylpropyl, 1-chloro-1-methylbutyl, 2-chloro-2-methylbutyl, 2-chloron-n-hexyl, 2-chloromethylamyl, 3-chloro-3-methylamyl, 2-chloro-1,1,2-trimethylpropyl, 4-chloro-3,3-dimethylbutyl and 2-chloron-n-heptyl. In the above-mentioned haloalkyls, Cl may be substituted by one or more selected from a group consisting of F, Br and I partly or wholly.

In formula 6, specifically, C3∼C8 cycloalkyl may be one selected from a group consisting of cyclopropyl, cyclobutyl, cycloamyl, cyclohexyl, cycloheptyl and cyclooctyl. C3∼C8 halocycloalkyl may be one selected from a group consisting of chlorocyclopropyl, chlorocyclobutyl, chlorocycloamyl and chlorocyclohexyl. In the above-mentioned halocycloalkyls, Cl may be substituted by one or more selected from a group consisting of F, Br and I partly or wholly.

In the electrolyte according to the first aspect of the present invention, specifically, the linear carboxylic acid ester may be one or more selected from a group consisting of methyl formate, ethyl formate, methyl acetate, ethyl acetate, propyl acetate, methyl propionate, ethyl propionate (EP), propyl propionate, butyl propionate, isobutyl propionate, n-pentyl propionate, isopentyl propionate, ethyl isopropionate, methyl butyrate, ethyl butyrate, ethyl isobutyrate, butyl butyrate, butyl isobutyrate, pentyl butyrate, isopentyl butyrate, ethyl valerate, ethyl isovalerate, propyl valerate, propyl isovalerate and the above-mentioned linear carboxylic acid ester compounds substituted by one or more selected from a group consisting of F, Cl, Br and I partly or wholly. Preferably, the linear carboxylic acid ester may be one or more selected from a group consisting of methyl acetate, ethyl acetate, propyl acetate, methyl propionate, ethyl propionate, propyl propionate and the above-mentioned linear carboxylic acid ester compounds substituted by one or more selected from a group consisting of F, Cl, Br and I partly or wholly.

In the electrolyte according to the first aspect of the present invention, a total mass of the ethylene carbonate and the ethyl methyl carbonate may be 60%∼80% of the total mass of the organic solvent. Because the linear carboxylic acid ester has a worse oxidation stability than the dimethyl carbonate, and is easily oxidized and decomposed on the interface of the positive electrode plate, the interface impedance of the positive electrode plate is gradually increased with the cycling processing, and the cycle performances under both room temperature fast charging and high temperature fast charging of the lithium-ion battery are deteriorated and the amount of gas generated during the storage progress under high temperature of the lithium-ion battery is also significantly increased. Preferably, the total mass of the dimethyl carbonate and the linear carboxylic acid ester may be 20%∼40% of the total mass of the organic solvent. Further preferably, the mass of the linear carboxylic acid ester is less than or equal to two times of the mass of the dimethyl carbonate. It should be noted that, when there is no linear carboxylic acid ester in the organic solvent, the mass of the dimethyl carbonate may be 20%∼40% of the total mass of the organic solvent.

In the electrolyte according to the first aspect of the present invention, the organic solvent may further comprise one or more selected from a group consisting of propylene carbonate (PC), butylene carbonate (BC), diethyl carbonate (DEC), dipropyl carbonate (DPC), methyl propyl carbonate (MPC), ethyl propyl carbonate (EPC) and the above-mentioned compounds substituted by one or more selected from a group consisting of F, Cl, Br and I partly or wholly.

In the electrolyte according to the first aspect of the present invention, the electrolyte salt may be one or more selected from a group consisting of LiPF₆, LiBF₄, LiN(SO₂F)₂, LiClO₄, LiAsF₆, LiN(SO₂R_{F})₂ and LiN(SO₂F)(SO₂R_{F}), R_{F} represents CₙF₂ₙ₊₁, n is an integer ranging from 1 to 10. Preferably, R_{F} may be -CF₃, -C₂F₅ or -CF₂CF₂CF₃. Further preferably, the electrolyte salt may be one or two selected from a group consisting of LiPF₆ and LiN(SO₂F)₂.

In the electrolyte according to the first aspect of the present invention, the electrolyte can be prepared by conventional methods, for example, each component for preparing the electrolyte can be uniformly mixed so as to obtain the electrolyte.

Next a lithium-ion battery according to a second aspect of the present invention is described, and the lithium-ion battery comprises the electrolyte according to the first aspect of the present invention.

Furthermore, the lithium-ion battery according to the second aspect of the present invention may comprise a positive electrode plate, a negative electrode plate, a separator and the electrolyte according to the first aspect of the present invention. The positive electrode plate comprises a positive current collector and a positive film provided on the positive current collector, the positive film comprises a positive active material, a binder and a conductive agent. The negative electrode plate comprises a negative current collector and a negative film provided on the negative current collector, the negative film comprises a negative active material and a binder, and may also comprise a conductive agent. The separator is positioned between the positive electrode plate and the negative electrode plate.

In the lithium-ion battery according to the second aspect of the present invention, the positive active material may be one or more selected from a group consisting of lithium cobalt oxide (LiCoO₂), lithium nickel oxide (LiNiO₂), spinel LiMn₂O₄, olivine LiMPO₄, ternary positive material LiNiₓA_{y}B_{(1-x-y)}O₂ and ternary positive material Li_{1-x'}(A'_{y'}B'_{z'}C_{1-y'-z'})O₂. In the olivine LiMPO₄, M is one or more selected from a group consisting of Co, Ni, Fe, Mn and V; in the ternary positive material LiNiₓA_{y}B_{(1-x-y)}O₂, A and B each independently are one selected from a group consisting of Co, Al and Mn, A and B are different from each other, 0<x<1, 0<y<1 and x+y<1; in the ternary positive material Li_{1-x'}(A'_{y'}B'_{z'}C_{1-y'-z'})O₂, A', B' and C each independently are one selected from a group consisting of Co, Ni, Fe and Mn, 0<x'<1, 0≤y'<1, 0≤z'<1, y'+z'<1, and A', B' and C are different from each other.

In the lithium-ion battery according to the second aspect of the present invention, the negative active material may be lithium metal. The negative active material may also be a material into which the lithium can be intercalated under a voltage less than 2V (vs.Li/Li⁺), specifically, the negative active material may be one or more selected from a group consisting of natural graphite, artificial graphite, mesocarbon microbeads (MCMB), hard carbon, soft carbon, silicon, silicon-carbon composite, Li-Sn alloy, Li-Sn-O alloy, Sn, SnO, SnO₂, Li₄Ti₅O₁₂ and Li-Al alloy.

In the lithium-ion battery according to the second aspect of the present invention, the separator may be any separator used in existing lithium-ion batteries, for example, the separator may be polyethylene membrane, polypropylene membrane, polyvinylidene fluoride membrane and the multilayer composite membrane thereof, but the present invention is not limited thereto.

Hereinafter the present invention will be described in detail in combination with examples. It should be noted that, the examples described in the present invention are only used for explaining the present invention, and are not intended to limit the present invention.

In the following examples, raw materials, reagents and instruments can be commercially purchased unless otherwise specified.

Lithium-ion batteries of reference examples 1-19 and 23-24, examples 20-22 according to the present invention and comparative examples 1-16 were all prepared in accordance with the following preparation method.

### (1) Preparation of a positive electrode plate

LNi_{0.5}CO_{0.2}Mn_{0.3}O₂ (positive active material), polyvinylidene fluoride (binder) and acetylene black (conductive agent) according to a mass ratio of 97:1:2 were uniformly mixed with N-methyl-2-pyrrolidone, then the mixed solution was uniformly stirred via a vacuum mixer until the mixed solution was homogeneous and transparent, a positive electrode slurry was obtained; then the positive electrode slurry was uniformly coated on an aluminum foil (positive current collector) with a thickness of 12 µm, drying was then performed under room temperature, then baking was performed at 120 °C for 1 h, which was followed by cold pressing and plate cutting, finally the positive electrode plate was obtained.

### (2) Preparation of a negative electrode plate

Artificial graphite (negative active material), conductive carbon black (conductive agent), carboxymethylcellulose sodium (CMC, thickening agent) and styrene-butadiene rubber (binder) according to a mass ratio of 96.4:1.5:0.8:1.3 were uniformly mixed with deionized water, then the mixed solution was uniformly stirred with a vacuum mixer to form a negative electrode slurry; then the negative electrode slurry was uniformly coated on a copper foil (negative current collector) with a thickness of 8 µm, drying was then performed under room temperature, then baking was performed at 120 °C for 1 h, which was followed by cold pressing and plate cutting, finally the negative electrode plate was obtained.

### (3) Preparation of an electrolyte

The electrolyte was prepared in a glove box filled with argon and a water content in the glove box was less than 10 ppm, the lithium salt was LiPF₆, a content of LiPF₆ was 15% of a total mass of the electrolyte.

The specific type and content of the organic solvent and the additive in the electrolyte were illustrated in table 1. In table 1, the content of each additive such as the boron-based or phosphorus-based lithium oxalate, the fluorinated lithium phosphate, the fluoroethylene carbonate and the vinylene carbonate was a mass percentage calculated based on the total mass of the electrolyte.

### (4) Preparation of a separator

The separator was polypropylene membrane with a thickness of 12 µm.

### (5) Preparation of a lithium-ion battery

The positive electrode plate, the separator and the negative electrode plate were laminated in order, the separator was positioned between the positive electrode plate and the negative electrode plate so as to separate the positive electrode plate from the negative electrode plate, then the positive electrode plate, the separator and the negative electrode plate were wound together to from an electrode assembly, then the electrode assembly was put into a case, which as followed by baking, injecting the electrolyte, formation and sealing, finally a lithium-ion battery was obtained.

**Table 1 Parameters of reference examples 1-19 and 23-24, examples 20-22 according to the present invention and comparative examples 1-16**

| | Organic solvent (mass ratio) | Additive 1 | | Additive 2 | | Additive 3 | |
|---|---|---|---|---|---|---|---|
| | | Type | Content | Type | Content | Type | Content |
| Example 1 | EC:EMC:DMC= 35:45:20 | Compound 13 | 0.5% | LiPO₂F₂ | 0.5% | VC | 0.8% |
| Example 2 | EC:EMC:DMC= 35:35:30 | Compound 13 | 0.5% | LiPO₂F₂ | 0.5% | VC | 0.8% |
| Example 3 | EC:EMC:DMC= 35:30:35 | Compound 13 | 0.5% | LiPO₂F₂ | 0.5% | VC | 0.8% |
| Example 4 | EC:EMC:DMC= 35:25:40 | Compound 13 | 0.5% | LiPO₂F₂ | 0.5% | VC | 0.8% |
| Example 5 | EC:EMC:DMC:EP= 35:35:20:10 | Compound 13 | 0.5% | LiPO₂F₂ | 0.5% | VC | 0.8% |
| Example 6 | EC:EMC:DMC:EP= 35:35:15:15 | Compound 13 | 0.5% | LiPO₂F₂ | 0.5% | VC | 0.8% |
| Example 7 | EC:EMC:DMC:EP= 35:35:10:20 | Compound 13 | 0.5% | LiPO₂F₂ | 0.5% | VC | 0.8% |
| Example 8 | EC:EMC:DMC= 35:35:30 | Compound 13 | 0.3% | LiPO₂F₂ | 0.5% | VC | 0.8% |
| Example 9 | EC:EMC:DMC= 35:35:30 | Compound 13 | 0.8% | LiPO₂F₂ | 0.5 % | VC | 0.8% |
| Example 10 | EC:EMC:DMC= 35:35:30 | Compound 13 | 1.0% | LiPO₂F₂ | 0.5% | VC | 0.8% |
| Example 11 | EC:EMC:DMC= 35:35:30 | Compound 13 | 0.5% | LiPO₂F₂ | 0.3% | VC | 0.8% |
| Example 12 | EC:EMC:DMC= 35:35:30 | Compound 13 | 0.5% | LiPO₂F₂ | 0.8% | VC | 0.8% |
| Example 13 | EC:EMC:DMC= 35:35:30 | Compound 13 | 0.5% | LiPO₂F₂ | 1.0% | VC | 0.8% |
| Example 14 | EC:EMC:DMC= 35:35:30 | Compound 13 | 0.5% | LiPO₂F₂ | 0.5% | VC | 0.5% |
| Example 15 | EC:EMC:DMC= 35:35:30 | Compound 13 | 0.5% | LiPO₂F₂ | 0.5% | VC | 1.5% |
| Example 16 | EC:EMC:DMC= 35:35:30 | Compound 13 | 0.5% | LiPO₂F₂ | 0.5% | FEC | 0.7% |
| Example 17 | EC:EMC:DMC= 35:35:30 | Compound 2 | 0.5% | LiPO₂F₂ | 0.5% | FEC | 2% |
| Example 18 | EC:EMC:DMC= 35:35:30 | Compound 2 | 0.5% | LiPO₂F₂ | 0.5% | FEC +VC | 1% +1% |
| Example 19 | EC:EMC:DMC= 35:35:30 | Compound 1 | 0.5% | LiPO₂F₂ | 0.5% | VC | 0.8% |
| Example 20 | EC:EMC:DMC= 35:35:30 | Compound 3 | 0.5% | LiPO₂F₂ | 0.5% | VC | 0.8% |
| Example 21 | EC:EMC:DMC= 35:35:30 | Compound 5 | 0.5% | LiPO₂F₂ | 0.5% | VC | 0.8% |
| Example 22 | EC:EMC:DMC= 35:35:30 | Compound 8 | 0.5% | LiPO₂F₂ | 0.5% | VC | 0.8% |
| Example 23 | EC:EMC:DMC= 35:35:30 | Compound 14 | 0.5% | LiPO₂F₂ | 0.5% | VC | 0.8% |
| Example 24 | EC:PC:EMC:DMC:EP =30:5:35:15:15 | Compound 13 | 0.5% | LiPO₂F₂ | 0.5% | VC | 0.8% |
| Comparative example 1 | EC:EMC=35:65 | - | - | - | - | - | - |
| Comparative example 2 | EC:EMC:DMC= 35:35:30 | - | - | - | - | - | - |
| Comparative example 3 | EC:EMC:EP= 35:35:30 | - | - | - | - | - | - |
| Comparative example 4 | EC:EMC=35:65 | Compound 13 | 0.5% | - | - | - | - |
| Comparative example 5 | EC:EMC=35:65 | - | - | LiPO₂F₂ | 0.5% | - | - |
| Comparative example 6 | EC:EMC=35:65 | - | - | - | - | vc | 0.8% |
| Comparative example 7 | EC:EMC:DMC= 35:35:30 | Compound 13 | 0.5% | - | - | - | - |
| Comparative example 8 | EC:EMC:DMC= 35:35:30 | - | - | LiPO₂F₂ | 0.5% | - | - |
| Comparative example 9 | EC:EMC:DMC= 35:35:30 | Compound 13 | 0.5% | LiPO₂F₂ | 0.5% | - | - |
| Comparative example 10 | EC:EMC=35:65 | Compound 13 | 0.5% | LiPO₂F₂ | 0.5% | VC | 0.8% |
| Comparative example 11 | EC:EMC:DMC= 35:15:50 | Compound 13 | 0.5% | LiPO₂F₂ | 0.5% | VC | 0.8% |
| Comparative example 12 | EC:EMC:DMC= 35:35:30 | Compound 13 | 1.5% | LiPO₂F₂ | 0.5% | VC | 0.8% |
| Comparative example 13 | EC:EMC:DMC= 35:35:30 | Compound 13 | 0.5% | LiPO₂F₂ | 1.5% | VC | 0.8% |
| Comparative example 14 | EC:EMC:DMC= 35:35:30 | Compound 13 | 0.5% | LiPO₂F₂ | 0.5% | VC | 2% |
| Comparative example 15 | EC:EMC:DMC= 35:35:30 | Compound 13 | 0.5% | LiPO₂F₂ | 0.5% | FEC | 2.5% |
| Comparative example 16 | EC:EMC:EP= 35:35:30 | Compound 13 | 0.5% | LiPO₂F₂ | 0.5% | VC | 0.8% |

| | | | | | | | |
|---|---|---|---|---|---|---|---|
| "-" represented that there was no additive in the electrolyte. | | | | | | | |

Hereinafter test processes of the lithium-ion batteries were described.

### (1) Testing of cycle performance under fast charging of the lithium-ion battery

The test processes were performed respectively under 25 °C and 45 °C. During the cycle test process, the lithium-ion battery was firstly charged to 4.2 V at a constant current of 7 C, then the lithium-ion battery was charged to a current less than or equal to 0.05 C at a constant voltage of 4.2 V and stand by 10 minutes, then the lithium-ion battery was discharged to 2.8 V at a constant current of 1 C, this was a charge-discharge cycle process. And the lithium-ion battery was repeated for 3000 cycles at 25 °C; the lithium-ion battery was repeated for 1500 cycles at 45 °C.

Capacity retention rate after N cycles of the lithium-ion battery (%) = (the discharge capacity of N^{th} cycle / the discharge capacity of the first cycle) × 100%, N represents the cycle number of the lithium-ion battery.

### (2) Testing of power performance of the lithium-ion battery

At 25 °C, the lithium-ion battery was charged to 4.2 V at a constant current of 1 C, then the lithium-ion battery was charged to 0.05 C at a constant voltage of 4.2 V, and then the lithium-ion battery was discharged for 30 minutes at a constant current of 1 C so as to make the lithium-ion battery be under 50% SOC. Then the lithium-ion battery was impulsively discharged for 30 seconds at a current of 4 C under 25 °C and impulsively discharged for 10 seconds at a current of 0.36 C under -25 °C respectively, the direct-current resistances (DCR) of the lithium-ion battery were respectively marked so as to indicate the power performance under room temperature and the power performance under low temperature of the lithium-ion battery respectively.

DCR = (the voltage before the impulsive discharge process - the voltage at the end of the impulsive discharge process) / (the discharge current during the impulsive discharge process).

### (3) Testing of storage performance under high temperature of the lithium-ion battery

At 25 °C, the lithium-ion battery was charged to 4.2 V at a constant current of 1 C, then the lithium-ion battery was charged to 0.05 C at a constant voltage of 4.2 V, and the volume of the lithium-ion battery was marked as V₀; then the lithium-ion battery was put into an incubator of 60 °C and stored for 60 days and 120 days respectively, the volume of the lithium-ion battery was measured again after the storage process was finished and the volume of the lithium-ion battery after the storage process was marked as Vₙ.

Volume expansion rate after stored for n days under 60 °C of the lithium-ion battery (%) = (Vₙ-V₀)/V₀×100%.

**Table 2 Test results of reference examples 1-19 and 23-24, examples 20-22 according to the present invention and comparative examples 1-16**

| | Capacity retention rate after 3000 cycles under 25°C | Capacity retention rate after 1500 cycles under 45°C | DCR (mohm) | | Volume expansion rate under 60°C | |
|---|---|---|---|---|---|---|
| | | | 25°C, 4C, 30s | -25°C, 0.36C, 10s | 60 days | 120 days |
| Example 1 | 88.11% | 82.32% | 22.89 | 347.70 | 8.43% | 23.26% |
| Example 2 | 88.33% | 82.85% | 22.73 | 343.50 | 9.71% | 25.32% |
| Example 3 | 89.15% | 82.96% | 22.50 | 335.20 | 10.20% | 29.60% |
| Example 4 | 90.67% | 82.52% | 22.20 | 340.40 | 11.08% | 35.52% |
| Example 5 | 87.54% | 81.49% | 22.22 | 331.80 | 10.54% | 29.58% |
| Example 6 | 86.72% | 81.22% | 21.94 | 337.70 | 11.73% | 32.61% |
| Example 7 | 86.31% | 80.84% | 21.63 | 323.50 | 12.90% | 37.98% |
| Example 8 | 87.22% | 81.14% | 21.33 | 315.80 | 9.90% | 25.56% |
| Example 9 | 90.20% | 84.42% | 23.21 | 349.50 | 8.10% | 20.70% |
| Example 10 | 90.52% | 86.25% | 23.76 | 355.57 | 12.50% | 35.65% |
| Example 11 | 88.17% | 81.86% | 21.60 | 343.36 | 9.50% | 25.79% |
| Example 12 | 88.98% | 82.97% | 24.10 | 340.58 | 8.90% | 22.90% |
| Example 13 | 89.75% | 85.68% | 24.80 | 323.30 | 7.40% | 20.10% |
| Example 14 | 86.19% | 80.94% | 22.10 | 329.67 | 12.63% | 26.90% |
| Example 15 | 89.73% | 84.11% | 23.00 | 348.64 | 15.10% | 34.10% |
| Example 16 | 86.34% | 80.27% | 21.94 | 319.35 | 13.46% | 29.43% |
| Example 17 | 87.71% | 81.22% | 23.21 | 330.94 | 17.54% | 39.96% |
| Example 18 | 88.13% | 82.93% | 22.86 | 338.76 | 15.93% | 37.85% |
| Example 19 | 89.52% | 83.21% | 22.95 | 352.8 | 10.53% | 27.89% |
| Example 20 | 86.55% | 80.36% | 23.19 | 324.04 | 16.46% | 38.12% |
| Example 21 | 88.46% | 81.93% | 22.92 | 351.32 | 11.15% | 28.78% |
| Example 22 | 87.12% | 81.19% | 23.21 | 330.56 | 12.47% | 35.27% |
| Example 23 | 89.79% | 84.76% | 23.35 | 358.19 | 8.89% | 21.96% |
| Example 24 | 84.87% | 80.09% | 22.45 | 330.58 | 10.32% | 29.83% |
| Comparative example 1 | 27.72% | 37.87% | 20.72 | 305.70 | 12.50% | 28.20% |
| Comparative example 2 | 50.65% | 40.24% | 20.03 | 302.00 | 31.30% | 69.70% |
| Comparative example 3 | 42.02% | N/A | 18.89 | 291.46 | 36.89% | 77.83% |
| Comparative example 4 | 54.21% | 55.67% | 22.26 | 329.60 | 6.24% | 15.70% |
| Comparative example 5 | 52.76% | 53.83% | 21.48 | 292.82 | 7.82% | 18.97% |
| Comparative example 6 | 51.53% | 41.78% | 21.52 | 314.86 | 9.20% | 20.85% |
| Comparative example 7 | 82.56% | 74.21% | 20.95 | 321.74 | 18.23% | 35.52% |
| Comparative example 8 | 81.16% | 71.81% | 21.24 | 288.94 | 18.73% | 39.32% |
| Comparative example 9 | 86.21% | 79.46% | 21.31 | 308.85 | 14.16% | 28.36% |
| Comparative example 10 | 57.46% | 79.15% | 25.79 | 349.40 | 4.50% | 10.92% |
| Comparative example 11 | 90.97% | 84.29% | 21.30 | 344.60 | 18.32% | 43.79% |
| Comparative example 12 | 94.28% | 88.93% | 24.28 | 372.82 | 17.30% | 49.87% |
| Comparative example 13 | 91.53% | 85.84% | 26.60 | 319.70 | 6.90% | 19.50% |
| Comparative example 14 | 87.96% | 80.95% | 25.10 | 360.52 | 18.20% | 45.52% |
| Comparative example 15 | 86.18% | 78.40% | 23.05 | 339.12 | 19.89% | 50.72% |
| Comparative example 16 | 82.23% | 77.76% | 19.14 | 319.26 | 26.53% | 52.86% |

| | | | | | | |
|---|---|---|---|---|---|---|
| "N/A" represented that the capacity retention rate has already decayed to 0 before the cycle test process was finished. | | | | | | |

It could be seen from table 2, when the electrolyte of the present invention was applied into the lithium-ion battery, the cycle performances under both room temperature fast charging and high temperature fast charging, the power performances under both room temperature and low temperature and the storage performance under high temperature of the lithium-ion battery were improved at the same time.

In comparative examples 1 and 4~6, DMC was not added into the electrolyte, the concentration polarization of the lithium-ion battery was too large, the capacity of the lithium-ion battery during the cycle test process with a large charging speed was quickly decreased, which could not satisfy the normal use of the lithium-ion battery. In comparative example 2, DMC was added into the organic solvent, the concentration polarization of the lithium-ion battery was appropriately decreased and the capacity of the lithium-ion battery during the cycle test process with a large charging speed was appropriately increased, however, the oxidation stability of DMC itself was worse, and therefore DMC was easily oxidized and decomposed into gas, thus the amount of gas generated during the storage process under high temperature of the lithium-ion battery was increased. In comparative example 3, EP (the linear carboxylic acid ester) was added into the organic solvent, the concentration polarization of the lithium-ion battery was also appropriately decreased, however, EP had a more worse oxidation stability than DMC, and therefore EP was more easily oxidized and decomposed at the interface of the positive electrode plate comprising nickle-rich positive active material, the interface impedance of the positive electrode plate was gradually increased, thus the cycle performance under high temperature fast charging and the storage performance under high temperature of the lithium-ion battery were both deteriorated. In comparative example 7, the boron-based or phosphorus-based lithium oxalate (compound 13) was added into the electrolyte , it could stabilize the oxygen elements in the positive active material, and it could also be reduced and decomposed at the negative electrode plate and form a more dense SEI membrane, so as to prevent the metal ions dissolved out from the positive active material from being reduced at the negative electrode plate and prevent DMC from being oxidized and decomposed, and therefore the cycle performances under both room temperature fast charging and high temperature fast charging and the storage performance under high temperature of the lithium-ion battery were all improved, but the power performance under low temperature of the lithium-ion battery was significantly deteriorated. In comparative example 8, the lithium difluorophosphate was added into the electrolyte, it could deactivate the positive electrode plate and decrease the low temperature impedance of the lithium-ion battery, and therefore the power performance under low temperature of the lithium-ion battery was improved. The lithium difluorophosphate could also prevent DMC from being oxidized and decomposed, and therefore the storage performance under high temperature of the lithium-ion battery was also appropriately improved. However, the lithium difluorophosphate was insoluble, which would significantly decrease the conductivity of the electrolyte, and therefore the power performance under room temperature of the lithium-ion battery was worse. In comparative example 9, the compound 13 and the lithium difluorophosphate were used together, the cycle performance under room temperature fast charging and the power performance under low temperature of the lithium-ion battery were significantly improved, but the performances under high temperature of the lithium-ion battery were still not effectively improved, for example, the cycle performance under high temperature fast charging and the storage performance under high temperature were still worse, and therefore the high temperature stability of the lithium-ion battery was still needed to be solved. In the examples of the present invention, the boron-based lithium oxalate or phosphorus-based lithium oxalate which is not according to the present invention, the fluorinated lithium phosphate and VC and/or FEC were added into the organic solvent comprising EC, EMC and DMC at the same time, and therefore the cycle performances under both room temperature fast charging and high temperature fast charging, the power performances under both room temperature and low temperature and the storage performance under high temperature of the lithium-ion battery were all excellent.

It could be seen from comparison among reference examples 1∼4 and comparative examples 10∼11, when there was no DMC in the electrolyte of comparative example 10, the concentration polarization of the lithium-ion battery was too large, the capacity of the lithium-ion battery during the cycle test process with a large charging speed was quickly decreased; as the content of DMC in the organic solvent increased, the cycle performances under both room temperature fast charging and high temperature fast charging of the lithium-ion battery were significantly improved, and the power performances under both room temperature and low temperature of the lithium-ion battery were also improved to a certain extent, however, the volume expansion rate under high temperature of the lithium-ion battery was also increased. This was because DMC could significantly decrease the viscosity of the electrolyte so as to decrease the concentration polarization of the lithium-ion battery, but because DMC had a worse oxidation stability, the amount of gas generated during the storage process under high temperature of the lithium-ion battery was significantly increased. When the mass percentage of DMC was too high (comparative example 11, the mass percentage was 50%), the amount of gas generated during the storage process under high temperature was too large, which could not satisfy the demands during the storage process under high temperature of the lithium-ion battery. Therefore, the mass percentage of DMC was preferably 20%∼40% of the total mass of the organic solvent.

It could be seen from comparison among reference examples 5∼7 and comparative example 16, as the content of EP in the organic solvent increased, the performances of the lithium-ion battery comprising EP were similar to those of the lithium-ion battery comprising DMC, and appropriate content of EP could further improve the power performances under both room temperature and low temperature of the lithium-ion battery, but too much content of EP would deteriorate the cycle performances under both room temperature fast charging and high temperature fast charging and the storage performance under high temperature of the lithium-ion battery. When there was no DMC but EP in the organic solvent (comparative example 16), because EP had a more worse oxidation stability than DMC and was thus more easily oxidized and decomposed at the interface of the positive electrode plate comprising nickle-rich positive active material, the interface impedance of the positive electrode plate was gradually increased with the cycling processing, the cycle performances under both room temperature fast charging and high temperature fast charging of the lithium-ion battery were deteriorated, and the amount of gas generated during the storage progress under high temperature of the lithium-ion battery was also significantly increased.

It could be seen from comparison among reference examples 2, 8∼10 and comparative example 12, as the content of compound 13 increased, the cycle performances under both room temperature fast charging and high temperature fast charging of the lithium-ion battery were significantly improved, but the power performances under both room temperature and low temperature were significantly deteriorated, and the volume expansion rate during the storage process under high temperature of the lithium-ion battery was also significantly decreased. This was because compound 13 could stabilize the oxygen elements in the positive active material and decrease the amount of side reactions between the positive active material and DMC, and compound 13 could also be reduced and decomposed at the negative electrode plate and form a more dense SEI membrane, so as to prevent the metal ions dissolved out from the positive active material from being reduced at the negative electrode plate, thereby improving the cycle performances under both room temperature fast charging and high temperature fast charging of the lithium-ion battery and also decreasing the amount of gas generated during the storage process under high temperature of the lithium-ion battery. However, the more dense SEI membrane generally had much larger impedance, which was not benefit to improve the power performances under both room temperature and low temperature of the lithium-ion battery. In comparative example 12, when there was too much compound 13 in the electrolyte, it might be not fully consumed during the formation of the SEI membrane and the extra compound 13 was easily decomposed into gas during the storage process under high temperature of the lithium-ion battery due to the presence of oxalate (C₂O₄²⁻). Therefore, the content of compound 13 was preferably 0.3%∼1% of the total mass of the electrolyte.

It could be seen from comparison among reference examples 2, 11∼13 and comparative example 13, as the content of LiPO₂F₂ increased, the cycle performances under both room temperature fast charging and high temperature fast charging of the lithium-ion battery were significantly improved, the volume expansion rate during the storage process under high temperature of the lithium-ion battery was significantly decreased, and the power performance under low temperature of the lithium-ion battery was significantly improved, however, the power performance under room temperature was significantly deteriorated. This was because LiPO₂F₂ might deactivate the positive electrode plate and decrease the amount of side reactions between the positive electrode plate and the electrolyte, so as to improve the cycle performances under both room temperature fast charging and high temperature fast charging and the storage performance under high temperature of the lithium-ion battery; LiPO₂F₂ might also decrease the low temperature impedance of the lithium-ion battery, so as to improve the power performance under low temperature of the lithium-ion battery at the same time. However, in comparative example 13, when too much LiPO₂F₂ was added into the electrolyte, the conductivity of the electrolyte was significantly decreased, and therefore the power performance under room temperature of the lithium-ion battery was deteriorated. Therefore, the content of LiPO₂F₂ was preferably 0.3%∼1% of the total mass of the electrolyte.

It could be seen from comparison among reference examples 2, 14∼18 and comparative examples 14∼15, as the content of VC and/or FEC increased, the cycle performances under both room temperature fast charging and high temperature fast charging of the lithium-ion battery were significantly improved, but the power performances under both room temperature and low temperature of the lithium-ion battery were worse, and the volume expansion rate during the storage process under high temperature of the lithium-ion battery was significantly increased. This was because VC and/or FEC might be reduced and decomposed at the negative electrode plate and form a more dense SEI membrane, thus the cycle performances under both room temperature fast charging and high temperature fast charging of the lithium-ion battery were improved. However, in comparative examples 14∼15, when the content of VC and/or FEC was too high, because VC and/or FEC might not be fully consumed during the first formation process of the SEI membrane, the extra VC and/or FEC would be oxidized and decomposed at the positive electrode plate, on one hand, the interface impedance of the positive electrode plate was increased, and the cycle performances under both room temperature fast charging and high temperature fast charging were deteriorated, on the other hand, too much gas would be generated during the oxidation reaction, the storage performance under high temperature of the lithium-ion battery was also deteriorated. Therefore, the content of VC was preferably 0.5%∼1.5% of the total mass of the electrolyte, the content of FEC was preferably 0.7%~2% of the total mass of the electrolyte.

According to the foregoing descriptions and teachings of the present invention, a person skilled in the art may also make appropriate variations and modifications to the above embodiments. Therefore, the present invention is not limited to the specific embodiments disclosed and described in the above, modifications and variations of the present invention will also be fallen within the scope of the appended claims of the present invention. Furthermore, although specific terminologies are used in the present invention, these terminologies are merely for convenience of description, and are not intended to limit the present invention.

## Claims

1. An electrolyte comprising an electrolyte salt, an organic solvent and an additive; the organic solvent comprises ethylene carbonate, dimethyl carbonate and ethyl methyl carbonate;
the additive comprises:
a fluorinated lithium phosphate; and
one or two selected from a group consisting of vinylene carbonate and fluoroethylene carbonate;
**characterized in that**
the additive further comprises: a boron-based lithium oxalate being one or more selected from following compounds:

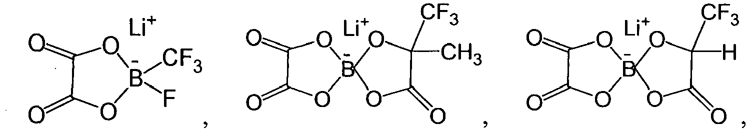

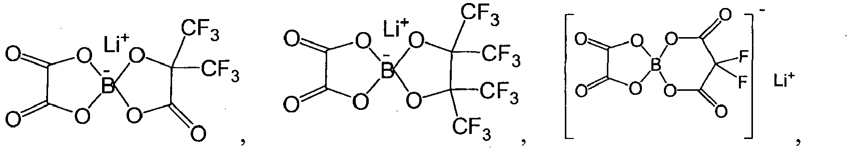

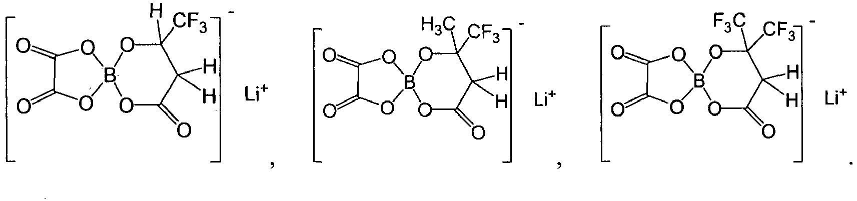

2. The electrolyte according to Claim 1, wherein the fluorinated lithium phosphate is one or two selected from a group consisting of lithium monofluorophosphate and lithium difluorophosphate.

3. The electrolyte according to Claim 1, wherein
a total mass of the ethylene carbonate and the ethyl methyl carbonate is 60%∼80% of a total mass of the organic solvent;
a content of the boron-based lithium oxalate is 0.3%∼1% of a total mass of the electrolyte;
a content of the fluorinated lithium phosphate is 0.3%∼1% of the total mass of the electrolyte;
a content of the vinylene carbonate is 0.5∼1.5% of the total mass of the electrolyte;
a content of the fluoroethylene carbonate is 0.7%∼2% of the total mass of the electrolyte.

4. The electrolyte according to Claim 1, wherein
the organic solvent further comprises a linear carboxylic acid ester, the linear carboxylic acid ester is one or more selected from compounds represented by formula 6;
in formula 6, R₂₁ is one selected from a group consisting of H, C1∼C10 alkyl of straight chain or branched chain, C1∼C10 haloalkyl of straight chain or branched chain, C3∼C8 cycloalkyl and C3∼C8 halocycloalkyl, R₂₂ is one selected from a group consisting of C1∼C10 alkyl of straight chain or branched chain, C1∼C10 haloalkyl of straight chain or branched chain, C3∼C8 cycloalkyl and C3∼C8 halocycloalkyl;

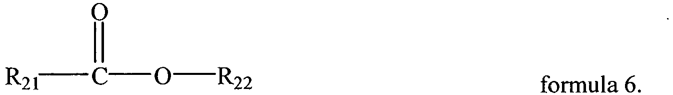

5. The electrolyte according to Claim 4, wherein the linear carboxylic acid ester is one or more selected from a group consisting of methyl formate, ethyl formate, methyl acetate, ethyl acetate, propyl acetate, methyl propionate, ethyl propionate, propyl propionate, butyl propionate, isobutyl propionate, n-pentyl propionate, isopentyl propionate, ethyl isopropionate, methyl butyrate, ethyl butyrate, ethyl isobutyrate, butyl butyrate, butyl isobutyrate, pentyl butyrate, isopentyl butyrate, ethyl valerate, ethyl isovalerate, propyl valerate, propyl isovalerate and the above-mentioned linear carboxylic acid ester compounds substituted by one or more selected from a group consisting of F, Cl, Br and I partly or wholly.

6. The electrolyte according to Claim 5, wherein the linear carboxylic acid ester is one or more selected from a group consisting of methyl acetate, ethyl acetate, propyl acetate, methyl propionate, ethyl propionate, propyl propionate and the above-mentioned linear carboxylic acid ester compounds substituted by one or more selected from a group consisting of F, Cl, Br and I partly or wholly.

7. The electrolyte according to Claim 4, wherein a total mass of the dimethyl carbonate and the linear carboxylic acid ester is 20%∼40% of a total mass of the organic solvent.

8. The electrolyte according to Claim 1 or 4, wherein the organic solvent further comprises one or more selected from a group consisting of propylene carbonate, butylene carbonate, diethyl carbonate, dipropyl carbonate, methyl propyl carbonate, ethyl propyl carbonate and the above-mentioned compounds substituted by one or more selected from a group consisting of F, Cl, Br and I partly or wholly.

9. The electrolyte according to Claim 1, wherein the electrolyte salt is one or more selected from a group consisting of LiPF₆, LiBF₄, LiN(SO₂F)₂, LiClO₄, LiAsF₆, LiN(SO₂R_{F})₂ and LiN(SO₂F)(SO₂R_{F}), R_{F} represents CₙF₂ₙ₊₁, n is an integer ranging from 1 to 10.

10. The electrolyte according to Claim 9, wherein the electrolyte salt is one or two selected from a group consisting of LiPF₆ and LiN(SO₂F)₂.

11. A lithium-ion battery comprising the electrolyte according to any one of Claims 1-10.

## Patentansprüche

1. Elektrolyt, welcher ein Elektrolytsalz, ein organisches Lösungsmittel und ein Additiv umfasst;
wobei das organische Lösungsmittel Ethylencarbonat, Dimethylcarbonat und Ethylmethylcarbonat umfasst;
wobei das Additiv umfasst:
ein fluoriertes Lithiumphosphat; und
eines oder zwei, welche ausgewählt sind aus einer Gruppe bestehend aus Vinylencarbonat und Fluorethylencarbonat;
**dadurch gekennzeichnet, dass**
das Additiv zudem umfasst: ein Bor-basiertes Lithiumoxalat, das eines oder mehrere ist, welche aus folgenden Verbindungen ausgewählt sind:

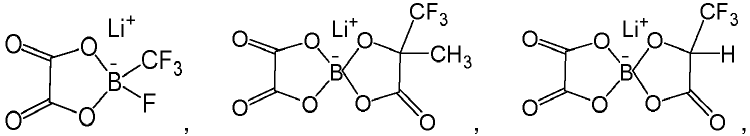

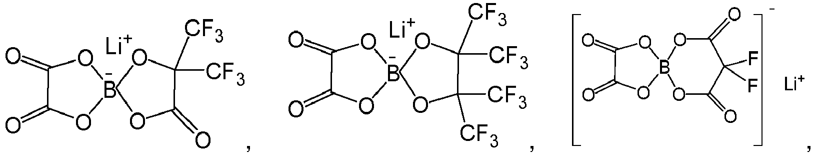

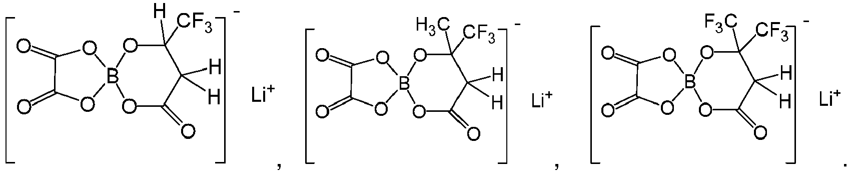

2. Elektrolyt nach Anspruch 1, wobei das fluorierte Lithiumphosphat eines oder zwei ist, welche ausgewählt sind aus einer Gruppe bestehend aus Lithium-Monofluorophosphat und Lithium-Difluorophosphat.

3. Elektrolyt nach Anspruch 1, wobei
eine Gesamtmasse des Ethylencarbonats und des Ethylmethylcarbonats 60%∼80% einer Gesamtmasse des organischen Lösungsmittels beträgt;
ein Gehalt des Bor-basierten Lithiumoxalats 0,3%∼1% einer Gesamtmasse des Elektrolyts beträgt;
ein Gehalt des fluorierten Lithiumphosphats 0,3%∼1% der Gesamtmasse des Elektrolyts beträgt;
ein Gehalt des Vinylencarbonats 0,5%∼1,5% der Gesamtmasse des Elektrolyts beträgt;
ein Gehalt des Fluorethylencarbonats 0,7%∼2% der Gesamtmasse des Elektrolyts beträgt.

4. Elektrolyt nach Anspruch 1, wobei
das organische Lösungsmittel zudem einen linearen Carbonsäureester umfasst, wobei der lineare Carbonsäureester einer oder mehrere ist, welche ausgewählt sind aus durch Formel 6 dargestellten Verbindungen;
in Formel 6 R₂₁ eines ist, welches ausgewählt ist aus einer Gruppe bestehend aus H, geradkettigem oder verzweigtkettigem C1∼C10-Alkyl, geradkettigem oder verzweigtkettigem C1∼C10-Haloalkyl, C3∼C8-Cycloalkyl und C3∼C8-Halocycloalkyl, und R₂₂ eines ist, welches ausgewählt ist aus einer Gruppe bestehend aus geradkettigem oder verzweigtkettigem C1∼C10-Alkyl, geradkettigem oder verzweigtkettigem C1∼C10-Haloalkyl, C3∼C8-Cycloalkyl und C8∼C8-Halocycloalkyl;

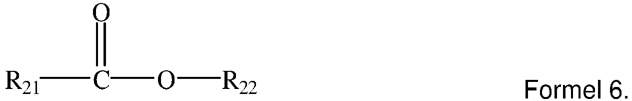

5. Elektrolyt nach Anspruch 4, wobei der lineare Carbonsäureester einer oder mehrere ist, welche ausgewählt sind aus der Gruppe bestehend aus Methylformiat, Ethylformiat, Methylacetat, Ethylacetat, Propylacetat, Methylpropionat, Ethylpropionat, Propylpropionat, Butylpropionat, Isobutylpropionat, n-Pentylpropionat, Isopentylpropionat, Ethylisopropionat, Methylbutyrat, Ethylbutyrat, Ethylisobutyrat, Butylbutyrat, Butylisobutyrat, Pentylbutyrat, Isopentylbutyrat, Ethylvalerat, Ethylisovalerat, Propylvalerat, Propylisovalerat und den oben genannten linearen Carbonsäureeester-Verbindungen, die ganz oder teilweise mit einem oder mehreren substituiert sind, welche ausgewählt sind aus einer Gruppe bestehend aus F, Cl, Br und I.

6. Elektrolyt nach Anspruch 5, wobei der lineare Carbonsäureester einer oder mehrere ist, welche ausgewählt sind aus der Gruppe bestehend aus Methylacetat, Ethylacetat, Propylacetat, Methylpropionat, Ethylpropionat, Propylpropionat und den oben genannten linearen Carbonsäureeester-Verbindungen, die ganz oder teilweise mit einem oder mehreren substituiert sind, welche ausgewählt sind aus einer Gruppe bestehend aus F, Cl, Br und I.

7. Elektrolyt nach Anspruch 4, wobei eine Gesamtmasse des Dimethylcarbonats und des linearen Carbonsäureesters 20%∼40% einer Gesamtmasse des organischen Lösungsmittels beträgt.

8. Elektrolyt nach Anspruch 1 oder 4, wobei das organische Lösungsmittel zudem eines oder mehrere umfasst, welche ausgewählt sind aus einer Gruppe bestehend aus Propylencarbonat, Butylencarbonat, Diethylcarbonat, Dipropylcarbonat, Methylpropylcarbonat, Ethylpropylcarbonat und den oben genannten Verbindungen, die ganz oder teilweise mit einem oder mehreren substituiert sind, welche ausgewählt sind aus einer Gruppe bestehend aus F, Cl, Br und I.

9. Elektrolyt nach Anspruch 1, wobei das Elektrolytsalz eines oder mehrere ist, welche ausgewählt sind aus einer Gruppe bestehend aus LiPF₆, LiBF₄, LiN(SO₂F)₂, LiClO₄, LiAsF₆, LiN(SO₂R_{F})₂ und LiN(SO₂F)(SO₂R_{F}), wobei R_{F} CₙF₂ₙ₊₁ darstellt und n eine ganze Zahl ist, die im Bereich von 1 bis 10 liegt.

10. Elektrolyt nach Anspruch 9, wobei das Elektrolytsalz eines oder zwei ist, welche ausgewählt sind aus einer Gruppe bestehend aus LiPF₆ und LiN(SO₂F)₂.

11. Lithium-Ionen-Batterie, welche den Elektrolyt nach einem der Ansprüche 1 bis 10 umfasst.

## Revendications

1. Electrolyte comprenant un sel d'électrolyte, un solvant organique et un additif ; le solvant organique comprenant le carbonate d'éthylène, le carbonate de diméthyle et le carbonate d'éthyl méthyle ;
l'additif comprenant :
un phosphate de lithium fluoré ; et
un ou deux choisis dans un groupe constitué par le carbonate de vinylène et le carbonate de fluoroéthylène ;
**caractérisé en ce que**
l'additif comprend en outre : un oxalate de lithium à base de bore qui est un ou plusieurs choisis parmi les composés suivants :

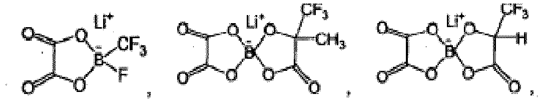

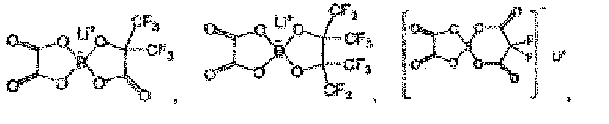

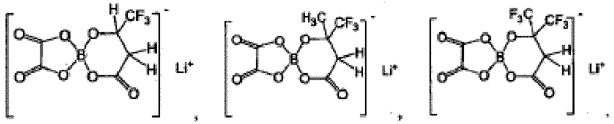

2. Electrolyte selon la revendication 1, dans lequel le phosphate de lithium fluoré est un ou deux choisis dans un groupe constitué par le monofluorophosphate de lithium et le difluorophosphate de lithium.

3. Electrolyte selon la revendication 1, dans lequel
une masse totale du carbonate d'éthylène et du carbonate d'éthyl méthyle est de 60 % à environ 80 % d'une masse totale du solvant organique ;
une teneur de l'oxalate de lithium à base de bore est de 0,3 % à environ 1 % d'une masse totale de l'électrolyte ;
une teneur du phosphate de lithium fluoré est de 0,3 % à environ 1 % de la masse totale de l'électrolyte ;
une teneur du carbonate de vinylène est de 0,5 à environ 1,5 % de la masse totale de l'électrolyte ;
une teneur du carbonate de fluoroéthylène est de 0,7 % à environ 2 % de la masse totale de l'électrolyte.

4. Electrolyte selon la revendication 1, dans lequel
le solvant organique comprend en outre un ester d'acide carboxylique linéaire, l'ester d'acide carboxylique linéaire est un ou plusieurs choisis parmi les composés représentés par la formule 6 ;
dans la formule 6, R₂₁ est un choisi dans un groupe constitué par H, un groupe alkyle en C1 à environ C10 de chaîne linéaire ou de chaîne ramifiée, halogénoalkyle en C1 à environ C10 de chaîne linéaire ou de chaîne ramifiée, cycloalkyle en C3 à environ C8 et halogénocycloalkyle en C3 à environ C8, R₂₂ est un choisi dans un groupe constitué par un groupe alkyle en C1 à environ C10 de chaîne linéaire ou de chaîne ramifiée, halogénoalkyle en C1 à environ C10 de chaîne linéaire ou de chaîne ramifiée, cycloalkyle en C3 à environ C8 et halogénoalkyle en C3 à environ C8 ;

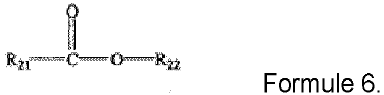

5. Electrolyte selon la revendication 4, dans lequel l'ester d'acide carboxylique linéaire est un ou plusieurs choisis dans un groupe constitué par le formate de méthyle, le formate d'éthyle, l'acétate de méthyle, l'acétate d'éthyle, l'acétate de propyle, le propionate de méthyle, le propionate d'éthyle, le propionate de propyle, le propionate de butyle, le propionate d'isobutyle, le propionate de n-pentyle, le propionate d'isopentyle, l'isopropionate d'éthyle, le butyrate de méthyle, le butyrate d'éthyle, l'isobutyrate d'éthyle, le butyrate de butyle, l'isobutyrate de butyle, le butyrate de pentyle, le butyrate d'iso-pentyle, le valérate d'éthyle, l'isovalérate d'éthyle, le valérate de propyle, l'isovalérate de propyle, et les composés d'ester d'acide carboxylique linéaire mentionnés ci-dessus substitués par un ou plusieurs d'un groupe constitué par F, Cl, Br et I partiellement ou complètement.

6. Electrolyte selon la revendication 5, dans lequel l'ester d'acide carboxylique linéaire est un ou plusieurs choisi dans un groupe constitué par l'acétate de méthyle, l'acétate d'éthyle, l'acétate de propyle, le propionate de méthyle, le propionate d'éthyle, le propionate de propyle et les composés d'ester d'acide carboxylique linéaire mentionnés ci-dessus substitués par un ou plusieurs d'un groupe constitué par F, Cl, Br et I partiellement ou complètement.

7. Electrolyte selon la revendication 4, dans lequel une masse totale du carbonate de diméthyle et de l'ester d'acide carboxylique linéaire est de 20 % à environ 40 % d'une masse totale du solvant organique.

8. Electrolyte selon la revendication 1 ou 4, dans lequel le solvant organique comprend en outre un ou plusieurs choisis dans un groupe constitué par le carbonate de propylène, le carbonate de butylène, le carbonate de diéthyle, le carbonate de dipropyle, le carbonate de méthyl propyle, le carbonate d'éthyl propyle et les composés mentionnés ci-dessus substitués par un ou plusieurs d'un groupe constitué par F, Cl, Br et I partiellement ou complètement.

9. Electrolyte selon la revendication 1, dans lequel le sel d'électrolyte est un ou plusieurs choisis dans un groupe constitué par LiPF₆, LiBF₄, LiN(SO₂F)₂, LiClO₄, LiAsF₆, LiN(SO₂R_{F})₂ et LiN(SO₂F)(SO₂R_{F}), R_{F} représente CₙF₂ₙ₊₁, n est un nombre entier se situant dans la plage allant de 1 à 10.

10. Electrolyte selon la revendication 9, dans lequel le sel d'électrolyte est un ou deux choisis dans un groupe constitué par LiPF₆ et LiN(SO₂F)₂.

11. Batterie ion-lithium comprenant l'électrolyte selon l'une quelconque des revendications 1 à 10.
